# EUROPÄISCHE PATENTSCHRIFT

(11) **EP 1 086 741 B1**
(45) Veröffentlichungstag und Bekanntmachung des Hinweises auf die Patenterteilung: **26.04.2006**
(21) Anmeldenummer: 00119466.1
(22) Anmeldetag: 15.09.2000
(51) Int. Cl.: B01D 53/94, F01N 3/08, F01N 3/023

(54) **Verfahren zur Steuerung einer Regeneration eines Partikelfilters und einer Entschwefelung eines NOx-Speicherkatalysators**
Process for controlling the regeneration of a particulate filter and the desulphurisation of a NOx storage catalyst
Procédé pour commander la régénération d'un filtre à particules et la désulfuration d'un catalyseur d'accumulation des oxydes d'azote

(30) Priorität: 22.09.1999 DE 19945336
(43) Veröffentlichungstag der Anmeldung: 28.03.2001
(73) Patentinhaber: Volkswagen Aktiengesellschaft, 38436 Wolfsburg (DE)
(72) Erfinder: Lang, Thomas, 38440 Wolfsburg (DE)

(56) Entgegenhaltungen:
- EP-A- 0 341 832
- EP-A- 0 758 713
- EP-A- 0 761 286
- WO-A-00/08311
- PATENT ABSTRACTS OF JAPAN vol. 018, no. 691 (M-1731), 26. Dezember 1994 (1994-12-26) & JP 06 272541 A (TOYOTA MOTOR CORP), 27. September 1994 (1994-09-27)

## Beschreibung

Die Erfindung betrifft ein Verfahren zur Steuerung einer Regeneration eines Partikelfilters und einer Entschwefelung eines NOₓ-Speicherkatalysators mit den im Oberbegriff des Anspruchs 1 genannten Merkmalen.

Zur Minderung von Schadstoffemissionen einer Diesel-Brennkraftmaschine ist es bekannt, eine Abgasreinigungsanlage in einem Abgaskanal der Diesel-Brennkraftmaschine anzuordnen. Derartige Abgasreinigungsanlagen umfassen beispielsweise Katalysatoren, die eine Reduktion oder Oxidation bestimmter Abgaskomponenten erlauben, Partikelfilter für emittierte Rußpartikel und auch geeignete Speichermedien für Stickoxide NOₓ oder unvollständig verbrannte Kohlenwasserstoffe HC.

Der Partikelfilter dient zum einen der Minderung der Rußpartikelemission und zum anderen sollen im Abgasstrom nachfolgende Komponenten der Abgasreinigungsanlage vor den Rußpartikeln geschützt werden. Mit zunehmender Betriebsdauer setzt sich der Partikelfilter allmählich zu. Notwendigerweise muß daher in regelmäßigen Abständen eine Regeneration durch oxidatives Ausbrennen des Partikelfilters erfolgen.

Eine Regenerationsnotwendigkeit des Partikelfilters kann bei den bekannten Verfahren in unterschiedlicher Weise detektiert werden. So ist bekannt, die Regeneration innerhalb vorbestimmter Zeitintervalle oder Fahrstrecken durchzuführen. Daneben sind auch zustandsorientierte Verfahren bekannt, bei denen mit Hilfe bekannter Betriebsparameter der Abgasreinigungsanlage und der Diesel-Brennkraftmaschinen ein Beladungswert des Partikelfilters berechnet wird. Nach Überschreitung eines vorgegebenen Schwellenwertes werden dann die notwendigen Regenerationsmaßnahmen ergriffen.

Eine Regeneration kann nur unter oxidativen Bedingungen durchgeführt werden, die im allgemeinen jedoch beim Normalbetrieb von Diesel-Brennkraftmaschinen (λ > 1) gegeben sind. Weiterhin muß eine Regenerationstemperatur überschritten werden. Letzteres läßt sich beispielsweise durch gezielte Eingriffe in den Verbrennungsvorgang erzielen.

Zur Minderung einer NOₓ-Emission ist es bekannt, mit Hilfe von Katalysatoren eine Reduktion von NOₓ zu bewirken. Die Reduktion kann allerdings in einem ausreichenden Maße nur unter einem Arbeitsmodus der Diesel-Brennkraftmaschine mit λ ≤ 1 stattfinden, da nur unter solchen Bedingungen genügend Reduktionsmittel (CO, HC) zur Verfügung stehen. Unter mageren Bedingungen (λ > 1) ist es daher bekannt, das NOₓ mit geeigneten Speichermedien zu absorbieren. Speicher und Katalysator können zu sogenannten NOₓ-Speicherkatalysatoren zusammengefaßt werden. In Abhängigkeit von einer Speicherkapazität wird bei bekannten Verfahren die NOₓ-Regeneration durch einen Wechsel in den Fettbetrieb eingeleitet.

Während des Verbrennungsvorgangs eines Luft-Kraftstoff-Gemisches entstehen durch schwefelhaltige Bestandteile auch Schwefeloxide SOₓ. SOₓ wird ebenso wie NOₓ von dem NOₓ-Speicherkatalysator absorbiert. Allerdings ist die Reversibilität dieses Prozesses an sehr viel höhere Temperaturen gebunden. So muß zur Entschwefelung eine Mindesttemperatur überschritten werden, die deutlich über der Mindesttemperatur der NOₓ-Regeneration liegt. Demnach sind im allgemeinen zusätzliche Aufheizmaßnahmen zur Einleitung der Entschwefelung notwendig, beispielsweise indem die Zusammensetzung des Luft-Kraftstoff-Gemisches geändert wird.

Aus der EP-A-0.758.713 ist eine Abgasreinigungsanlage bekannt, die einen Oxidationskatalysator, einen diesem nachgeschalteten Partikelfilter sowie einen dem Partikelfilter nachgeschalteten NOₓ-Speicherkatalysator umfasst. Es wird ein Verfahren zur Steuerung einer Regeneration des Partikelfilters sowie einer NOₓ-Regeneration des Speicherkatalysators beschrieben.

Nachteilig beim Stand der Technik ist es, daß die Verfahren zur Entschwefelung oder zur Regeneration des Partikelfilters unabhängig voneinander durchgeführt werden. So führen vor allem die häufig notwendigen Aufheizmaßnahmen zu einem erhöhten Kraftstoffverbrauch. Zudem ist hierdurch eine erhöhte Gefahr der thermischen Schädigung der Abgasreinigungsanlage gegeben.

Aufgabe des vorliegenden Verfahrens ist es daher, die Entschwefelung oder die Regeneration des Partikelfilters zumindest in Teilen gemeinsam durchzuführen und damit die Gemeinsamkeiten beider Verfahren zu nutzen.
Erfindungsgemäß wird diese Aufgabe durch das Verfahren zur Steuerung der Regeneration des Partikelfilters und der Entschwefelung des NOₓ-Speicherkatalysators mit den im Anspruch 1 genannten Merkmalen gelöst. Dadurch, daß
(a) eine Entschwefelungsnotwendigkeit des NOₓ-Speicherkatalysators beim Überschreiten eines ersten Schwellenwertes S1ₖₐₜ für einen Verschwefelungsgrad undeine Regenerationsnotwendigkeit des Partikelfilters beim Überschreiten eines ersten Schwellenwertes für einen Beladungswert vorliegt und
(b) die Entschwefelung und die Regeneration erst dann eingeleitet werden, wenn die beiden ersten Schwellenwerte überschritten sind, sofern der Verschwefelungsgrad nicht über einem zweiten Schwellenwert oder der Beladungswert über einem zweiten Schwellenwert liegt,
   ist es möglich, beide Verfahren zu kombinieren und gegebenenfalls unnötige Aufheizmaßnahmen zu vermeiden.

Der erste Schwellenwert S1ₖₐₜ liegt dabei bevorzugt bei einem Verschwefelungsgrad von S1ₖₐₜ = 40 bis 50 % und der zweite Schwellenwert S2ₖₐₜ in einem Bereich von S2ₖₐₜ = 80 bis 90 %. Weiterhin hat es sich als vorteilhaft erwiesen, den ersten Schwellenwert S1ₚₐᵣ in einem Bereich von S1ₚₐᵣ = 40 bis 50 % sowie den korrespondierenden zweiten Schwellenwert S2ₚₐᵣ auf einen Beladungswert von S2par = 80 bis 90 % festzulegen.

Es hat sich ferner als vorteilhaft erwiesen, zunächst die Regeneration des Partikelfilters einzuleiten und danach gegebenenfalls die Temperatur auf die Mindesttemperatur zur Entschwefelung zu erhöhen. Anschließend wird der Arbeitsmodus der Diesel-Brennkraftmaschine auf λ ≤ 1 geregelt (Anfetten). Diese Vorgehensweise ist deshalb besonders sinnvoll, da die Regenerationstemperatur des Partikelfilters, insbesondere bei Additivverwendung (400 °C statt 550 bis 650 °C) zumeist unterhalb der Mindesttemperatur für die Entschwefelung liegt. Zunächst wird demzufolge durch geeignete Maßnahmen die Temperatur im Bereich der Abgasreinigungsanlage zunächst auf die Regenerationstemperatur erhöht. Zusätzlich erfolgt eine Aufheizung durch die exotherme Oxidation der Rußpartikel. Infolgedessen wird zumeist am Ende der Partikelfilterregeneration die Mindesttemperatur der Entschwefelung erreicht und es kann ohne zusätzliche Aufheizmaßnahmen in den Fettbetrieb gewechselt werden.

Besonders vorteilhaft ist es dabei, den Regenerationsvorgang des Partikelfilters in Abhängigkeit von dem Beladungswert und der Abgastemperatur stromab des Partikelfilters zu steuern. So kann das Anfetten schon gegen Ende der Regeneration sukzessive eingeleitet und auf diese Weise die Gesamtdauer beider Verfahren verkürzt werden. Zudem kann auf diese Weise ein übermäßiges Aufheizen der Abgasreinigungsanlage infolge der exothermen Oxidation der Rußpartikel vermieden werden, da mit sinkendem Lambdawert die Oxidation erschwert wird.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: ein schematisches Blockschaltbild einer Diesel-Brennkraftmaschine mit einer Abgasreinigungsanlage und
- Figur 2: ein Flußdiagramm zur Steuerung einer Regeneration eines Partikelfilters und einer Entschwefelung eines NOₓ₋Speicherkatalysators.

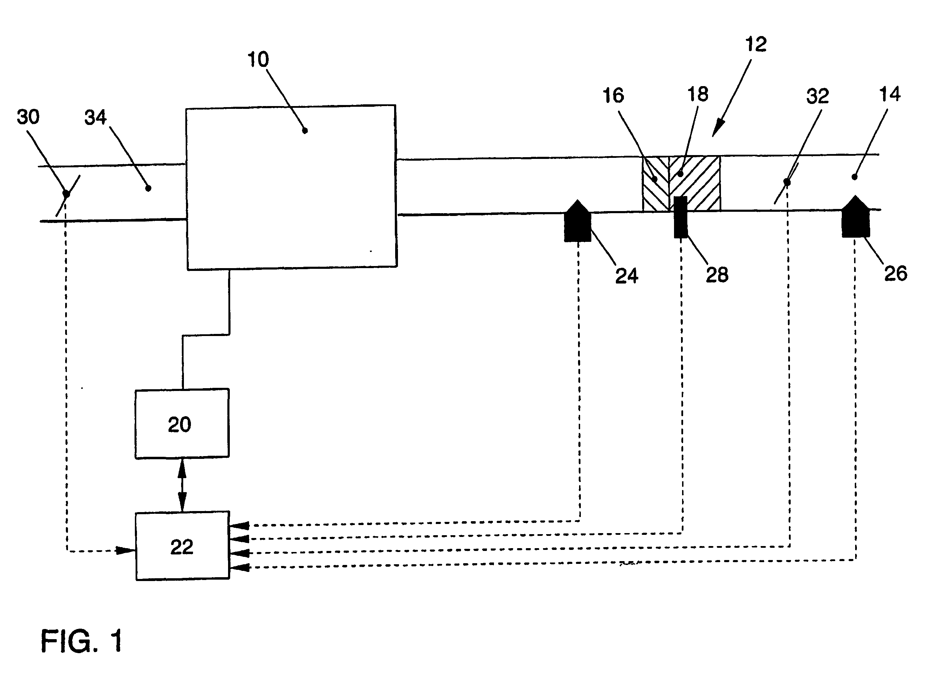

In der Figur 1 ist schematisch eine Diesel-Brennkraftmaschine 10 mit einer Abgasreinigungsanlage 12, die sich in einem Abgaskanal 14 befindet, dargestellt. Die Abgasreinigungsanlage umfaßt zumindest einen Partikelfilter 16 und einen NOₓ₋Speicherkatalysator 18. Ferner ist der Diesel-Brennkraftmaschine 10 ein Einspritzsystem 20 zugeordnet, das über ein Motorsteuergerät 22 geregelt werden kann.

Die Regelung eines Arbeitsmodus der Diesel-Brennkraftmaschine 10 kann anhand von ausgewählten Betriebsparametern erfolgen. So ist es denkbar, beispielsweise über die in dem Abgaskanal 14 angeordneten Lambdasonden und/oder NOₓ-Sensoren 24, 26 eine Zusammensetzung des Abgases zu bestimmen. Weiterhin kann beispielsweise eine Abgastemperatur im Bereich der Abgasreinigungsanlage 12 mittels eines Temperatursensors 28 erfaßt oder mit einem Modell simuliert werden. Die Stellwinkel von Drosselklappen 30, 32 einerseits in dem Abgaskanal 14 als auch in einem Saugrohr 34 der Diesel-Brennkraftmaschine 10 lassen sich ebenfalls als Eingangsgrößen für das Motorsteuergerät 22 nutzen. Über das Einspritzsystem 20 können eine eingespritzte Kraftstoffmasse, ein Zündwinkel oder auch eine Vertrimmung einzelner Zylinder der Diesel-Brennkraftmaschine 10 geregelt werden. Derartige Verfahren sind bekannt und sollen an dieser Stelle nicht näher erläutert werden.

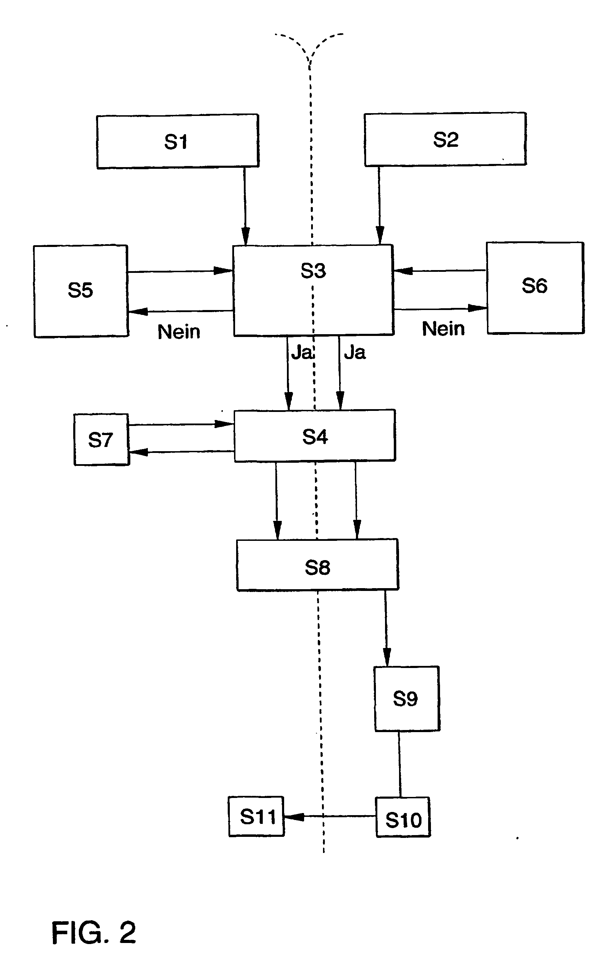

Die Figur 2 zeigt ein Flußdiagramm für ein Verfahren zur Steuerung einer Regeneration des Partikelfilters 16 und einer Entschwefelung des NOₓ-Speicherkatalysators 18. Gemeinsame Verfahrensschritte sind dabei mittig entlang der gestrichelten Linie angeordnet und linksseitig sind Verfahrensschritte, die nur während der Entschwefelung und rechtsseitig sind Verfahrensschritte, die nur während der Partikelfilterregeneration von Bedeutung sind, den gemeinsamen Verfahrensschritten zugeordnet.

Zunächst wird in einem Schritt S1 eine Entschwefelungsnotwendigkeit des NOₓ₋Speicherkatalysators 18 anhand eines Verschwefelungsgrades evaluiert. Dazu kann beispielsweise die über die Sensoren 24, 26 ermittelte Zusammensetzung des Abgases vor und hinter dem NOₓ-Speicherkatalysator 18 bewertet werden. Derartige Verfahren zur Ermittlung der Entschwefelungsnotwendigkeit sind bekannt. Beim Überschreiten des Verschwefelungsgrades über einen ersten Schwellenwert S1ₖₐₜ besteht Entschwefelungsnotwendigkeit. Der erste Schwellenwert S1ₖₐₜ liegt dabei in einem Bereich von 40 bis 50 %.

Neben der Erfassung der Entschwefelungsnotwendigkeit wird gleichzeitig eine Regenerationsnotwendigkeit des Partikelfilters 16 bestimmt (Schritt S2). Dazu läßt sich mit Hilfe ausgewählter Betriebsparameter der Diesel-Brennkraftmaschine 10 und der Abgasreinigungsanlage 12 sowie anhand eines Modells ein Beladungswert des Partikelfilters 16 ermitteln. Das Modell für den Beladungswert umfaßt dabei Größen wie beispielsweise einen Luftmassenstrom der Diesel-Brennkraftmaschine 10 oder einen Abgasgegendruck vor dem Partikelfilter 16 im Abgaskanal 14. Überschreitet der Beladungswert einen vorgegebenen ersten Schwellenwert S1ₚₐᵣ, so besteht Regenerationsnotwendigkeit. Der erste Schwellenwert S1ₚₐᵣ liegt dabei in einem Bereich von 40 bis 50 %.

Liegen nur Entschwefelungsnotwendigkeit oder nur Regenerationsnotwendigkeit vor, so wird die entsprechend notwendige Maßnahme noch nicht eingeleitet. Stattdessen wird zunächst so lange abgewartet (Abfrageschritt S3), bis sowohl der erste Schwellenwert S1ₖₐₜ für den Verschwefelungsgrad als auch der erste Schwellenwert S1ₚₐᵣ für den Beladungswert überschritten sind. Erst dann werden geeignete Regenerationsmaßnahmen eingeleitet (Schritt S4).

Weiterhin ist es notwendig, die Entschwefelung oder die Partikelfilterregeneration auch vor dem Überschreiten des korrespondierenden ersten Schwellenwertes S1ₖₐₜ oder S1ₚₐᵣ zu initiieren, um eine Schädigung der Abgasreinigungsanlage 12 oder erhöhte Schadstoffemissionen zu verhindern. So wird in einem Schritt S5 ein zweiter Schwellenwert S2ₖₐₜ vorgegeben, ab dem zwingend die Entschwefelung durchgeführt werden muß. Der zweite Schwellenwert S2ₖₐₜ liegt dabei vorzugsweise in einem Bereich von 80 bis 90 % des Verschwefelungsgrades. In gleicher Weise ist es notwendig, fur den zweiten Schwellenwert S2ₚₐᵣ den Beladungswert des Partikelfilters 16 vorzugeben (Schritt S6). Vorzugsweise liegt der zweite Schwellenwert S2ₚₐᵣ in einem Bereich von 80 bis 90 %.

Werden die beiden Verfahren gemeinsam durchgeführt (Schritt S4), so kann zunächst zur Vermeidung einer unkontrollierten NOₓ-Desorption eine NOₓ-Regeneration durchgeführt werden, indem kurzfristig ein Wechsel in den Fettbetrieb stattfindet (Schritt S7). Ein derartiger Verfahrensschritt kann in bekannter Weise abhängig gemacht werden von einem Beladungsgrad des Speicherkatalysators 18 mit NOₓ.

Als nächstes werden die temperaturerhöhenden Maßnahmen - sofern notwendig - eingeleitet (Schritt S8). Die Temperatur muß im Bereich des Partikelfilters 16 beziehungsweise Speicherkatalysators 18 oberhalb einer Regenerationstemperatur beziehungsweise Mindesttemperatur liegen. Die Regenerationstemperatur für die Partikelfilterregeneration ist üblicherweise unterhalb der Mindesttemperatur für die Entschwefelung. Daher werden zunächst die Bedingungen zur Partikelfilterregeneration optimiert. Eine Temperaturerhöhung läßt sich beispielsweise durch Erhöhung des Abgasgegendruckes erreichen, indem die Drosselklappe 32 verstellt wird. Denkbar ist auch, die Zusammensetzung des Luft-Kraftstoff-Gemisches über das Einspritzsystem 20 und die Drosselklappe 30 zu beeinflussen.

Während die Partikelfilterregeneration läuft, kommt es im allgemeinen zu einer weiteren Temperaturerhöhung infolge der exothermen Oxidationsprozesse. Zur Vermeidung einer Überhitzung und zur Verkürzung der Gesamtdauer beider Verfahren hat es sich daher als vorteilhaft erwiesen, bereits vor Ende der Partikelfilterregeneration mit der Regelung der Diesel-Brennkraftmaschine 10 in Richtung Fettbetrieb zu beginnen (Schritt S10). Aber erst wenn die Partikelfilterregeneration abgeschlossen ist, wird der Lambdawert auf den für die Entschwefelung optimalen Wert eingeregelt (Schritt S11). Die gesamte Vorgehensweise erlaubt es somit, den Rußabbrand zu steuern und bei bestehender Gefahr der Überhitzung den Sauerstoffzufluß/Sauerstoffanteil zu mindern.

## Patentansprüche

1. Verfahren zur Steuerung einer Regeneration eines Partikelfilters (16) und einer Entschwefelung eines NOₓ-Speicherkatalysators (18), wobei der Partikelfilter (16) und der NOₓ-Speicherkatalysator (18) Teil einer Abgasreinigungsanlage (12) einer Diesel-Brennkraftmaschine (10) sind und zur Entschwefelung des NOₓ-Speicherkatalysators (18) eine Mindesttemperatur und ein Arbeitsmodus der Diesel-Brennkraftmaschine (10) mit λ ≤ 1 vorliegen muss sowie zur Regeneration des Partikelfilters(16) eine Regenerationstemperatur überschritten werden muss, und wobei
(a) eine Entschwefelungsnotwendigkeit des NOₓ-Speicherkatalysators (18) beim Überschreiten eines ersten Schwellenwertes S1ₖₐₜ für einen Verschwefelungsgrad und eine Regenerationsnotwendigkeit des Partikelfilters (16) beim Überschreiten eines ersten Schwellenwertes S1ₚₐᵣ für einen Beladungswert bestimmt wird,
(b) die Entschwefelung und die Regeneration erst dann eingeleitet werden, wenn sowohl der erste Schwellenwert (S1ₖₐₜ) für den Verschwefelungsgrad als auch der erste Schwellenwert (S1ₚₐᵣ) für den Beladungswert überschritten sind, und
(c) sofern der Verschwefelungsgrad über einem zweiten Schwellenwert (S2ₖₐₜ) liegt, der größer als der erste Schwellenwert (S1ₖₐₜ) für den Verschwefelungsgrad ist, die Entschwefelung des NOₓ-Speicherkatalysators (18) eingeleitet wird oder, wenn der Beladungswert über einem zweiten Schwellenwert (S2ₚₐᵣ) liegt, der größer als der erste Schwellenwert (S1ₚₐᵣ) für den Beladungswert ist, die Regeneration des Partikelfilters (16) eingeleitet wird.

2. Verfahren nach Anspruch 1, **dadurch gekennzeichnet, dass** der erste Schwellenwert S1ₖₐₜ bei einem Verschwefelungsgrad des NOₓ-Speicherkatalysators (18) von S1ₖₐₜ = 40 bis 50 % liegt.

3. Verfahren nach Anspruch 1, **dadurch gekennzeichnet, dass** der erste Schwellenwert S1ₚₐᵣ bei einem Beladungswert des Partikelfilters (16) von S1ₚₐᵣ=40 bis 50 % liegt.

4. Verfahren nach Anspruch 1, **dadurch gekennzeichnet, dass** der zweite Schwellenwert S2ₖₐₜ bei einem Verschwefelungsgrad des NOₓ-Speicherkatalysators (18) von S2ₖₐₜ = 80 bis 90 % liegt.

5. Verfahren nach Anspruch 1, **dadurch gekennzeichnet, dass** der zweite Schwellenwert S2ₚₐᵣ bei einem Beladungswert des Partikelfilters (16) von S2ₚₐᵣ = 80 bis 90 % liegt.

6. Verfahren nach einem der vorhergehenden Ansprüche, **dadurch gekennzeichnet, dass** zunächst die Regeneration des Partikelfilters (16) durchgeführt wird, danach zur Entschwefelung des NOₓ-Speicherkatalysators (18) gegebenenfalls die Temperatur auf die Mindesttemperatur erhöht und anschließend der Arbeitsmodus der Diesel-Brennkraftmaschine (10) auf λ ≤ 1 geregelt wird.

7. Verfahren nach Anspruch 6, **dadurch gekennzeichnet, dass** in Abhängigkeit von dem Beladungswert und der Abgastemperatur stromab des Partikelfilters (16) das Anfetten schon während der Regeneration des Partikelfilters (16) eingeleitet wird.

8. Verfahren nach einem der vorhergehenden Ansprüche, **dadurch gekennzeichnet, dass** die Regeneration des Partikelfilters (16) unter oxidativen Bedingungen und bei einer Temperatur des Partikelfilters (16) oberhalb der Regenerationstemperatur, die unterhalb der Mindesttemperatur für die Entschwefelung liegt, durchgeführt wird.

9. Verfahren nach einem der vorhergehenden Ansprüche, **dadurch gekennzeichnet, dass** vor der Regeneration des Partikelfilters (16) eine NOₓ-Regeneration des NOₓ-Speicherkatalysators (8) durch kurzfristigen Wechsel in den Fettbetrieb durchgeführt wird.

10. Verfahren nach Anspruch 9, **dadurch gekennzeichnet, dass** die Durchführung der NOₓ₋Regeneration in Abhängigkeit von einem NOₓ-Beladungszustand des NOₓ-Speicherkatalysators (18) erfolgt.

## Revendications

1. Procédé de commande de régénération d'un filtre à particules (16) et de désulfuration d'un catalyseur à accumulation de NOx (18) où le filtre à particules (16) et le catalyseur à accumulation de NOx (18) font partie d'un dispositif d'épuration des gaz d'échappement (12) d'un moteur à combustion interne Diesel (10), où une température minimale et un mode de fonctionnement du moteur à combustion interne Diesel (10) avec lambda ≤ 1 doivent être présents pour la désulfuration du catalyseur à accumulation de NOx (18) et, de même, une température de régénération doit être dépassée pour la régénération du filtre à particules (16) et où
(a) la nécessité d'une désulfuration du catalyseur à accumulation de NOx (18) apparaît en cas de dépassement d'une première valeur de seuil S1ₖₐₜ d'un taux de sulfuration et une nécessité de régénération du filtre à particules (16) apparaît en cas de dépassement d'une première valeur de seuil S1ₚₐᵣ d'une valeur de charge ;
(b) la désulfuration et la régénération sont uniquement lancées si non seulement la première valeur de seuil (S1ₖₐₜ) du taux de sulfuration mais aussi la première valeur de seuil (S1ₚₐᵣ) de la valeur de charge sont dépassées et
(c) pour autant que le taux de sulfuration dépasse une deuxième valeur de seuil (S2ₖₐₜ), laquelle est plus grande que la première valeur de seuil (S1ₖₐₜ) du taux de sulfuration, la désulfuration du catalyseur à accumulation de NOx (18) est lancée ou, si la valeur de charge est supérieure à une deuxième valeur de seuil (S2ₚₐᵣ), laquelle est plus grande que la première valeur de seuil (S1ₚₐᵣ) de la valeur de charge, la régénération du filtre à particules (16) est lancée.

2. Procédé selon la revendication 1, **caractérisé en ce que** la première valeur de seuil S1ₖₐₜ se situe autour d'un taux de sulfuration du catalyseur à accumulation de NOx (18) entre 40 et 50%.

3. Procédé selon la revendication 1, **caractérisé en ce que** la première valeur de seuil S1ₚₐᵣ se situe autour d'une valeur de charge du filtre à particules (16) entre 40 et 50%.

4. Procédé selon la revendication 1, **caractérisé en ce que** la deuxième valeur de seuil S2ₖₐₜ se situe autour d'un taux de sulfuration du catalyseur à accumulation de NOx (18) entre 80 et 90%.

5. Procédé selon la revendication 1, **caractérisé en ce que** la deuxième valeur de seuil S2ₚₐᵣ se situe autour d'une valeur de charge du filtre à particules (16) entre 80 et 90%.

6. Procédé selon l'une quelconque des revendications précédentes **caractérisé en ce que** la régénération du filtre à particules (16) est d'abord effectuée, la température est ensuite augmentée jusqu'à la température minimale de désulfuration du catalyseur à accumulation de NOx (18) et, finalement, le mode de fonctionnement du moteur à combustion interne Diesel (10) est réglé sur lambda ≤ 1.

7. Procédé selon la revendication 6, **caractérisé en ce qu'**en fonction de la valeur de charge et de la température des gaz d'échappement en aval du filtre à particules (16), l'enrichissement est déjà lancé pendant la régénération du filtre à particules (16).

8. Procédé selon l'une quelconque des revendications précédentes **caractérisé en ce que** la régénération du filtre à particules (16) est effectuée sous des conditions oxydatives et à une température du filtre à particules (16) supérieure à la température de régénération qui est inférieure à la température minimale de désulfuration.

9. Procédé selon l'une quelconque des revendications précédentes **caractérisé en ce qu'**avant la régénération du filtre à particules (16), une régénération des NOx du catalyseur à accumulation de NOx (8) est effectuée par un passage temporaire en régime riche.

10. Procédé selon la revendication 9, **caractérisé en ce que** l'exécution de la régénération des NOx se produit en fonction de l'état de charge en NOx du catalyseur à accumulation de NOx (18).

## Claims

1. Method for controlling the regeneration of a particulate filter (16) and the desulphurization of an NOₓ storage catalytic converter (18), in which the particulate filter (16) and the NOₓ storage catalytic converter (18) form part of an exhaust gas purification system (12) of a diesel internal combustion engine (10), and for desulphurization of the NOₓ storage catalytic converter (18) a minimum temperature and working mode of the diesel internal combustion engine (10) with λ ≤ 1 must be present, and for regeneration of the particulate filter (16) a regeneration temperature must be exceeded, and in which method
(a) the need for desulphurization of the NOₓ storage catalytic converter (18) is determined when a first threshold value S1_{cat} for a degree of sulphurization is exceeded and the need for regeneration of the particulate filter (16) is determined when a first threshold value S1ₚₐᵣ for a loading level is exceeded,
(b) the desulphurization and the regeneration are only initiated when both the first threshold value (S1_{cat}) for the degree of sulphurization and the first threshold value (S1ₚₐᵣ) for the loading level have been exceeded, and
(c) if the degree of sulphurization is above a second threshold value (S2_{cat}), which is greater than the first threshold value (S1_{cat}) for the degree of sulphurization, the desulphurization of the NOₓ storage catalytic converter (18) is initiated, or, if the loading level is above a second threshold value (S2ₚₐᵣ), which is greater than the first threshold value (S1ₚₐᵣ) for the loading level, the regeneration of the particulate filter (16) is initiated.

2. Method according to.Claim 1, **characterized in that** the first threshold value (S1_{cat}) lies at a degree of sulphurization of the NOₓ storage catalytic converter (18) of S1_{cat} = 40 to 50%.

3. Method according to Claim 1, **characterized in that** the first threshold value S1ₚₐᵣ lies at a loading level of the particulate filter (16) of S1ₚₐᵣ = 40 to 50%.

4. Method according to Claim 1, **characterized in that** the second threshold value S2_{cat} lies at a degree of sulphurization of the NOₓ storage catalytic converter (18) of S2_{cat} = 80 to 90%.

5. Method according to Claim 1, **characterized in that** the second threshold value S2ₚₐᵣ lies at a loading level of the particulate filter (16) of S2ₚₐᵣ = 80 to 90%.

6. Method according to one of the preceding claims, **characterized in that** the regeneration of the particulate filter (16) is carried out first of all, and thereafter if appropriate the temperature is increased to the minimum temperature for the desulphurization of the NOₓ storage catalytic converter (18), and after that the operating mode of the diesel internal combustion engine (10) is adjusted to λ ≤1.

7. Method according to Claim 6, **characterized in that** depending on the loading level and the exhaust-gas temperature downstream of the particulate filter (16), the enriching of the mix is initiated even while the regeneration of the particulate filter (16) is still ongoing.

8. Method according to one of the preceding claims, **characterized in that** the regeneration of the particulate filter (16) is carried out under oxidizing conditions and at a temperature of the particulate filter (16) above the regeneration temperature, which is lower than the minimum temperature for the desulphurization.

9. Method according to one of the preceding claims, **characterized in that** prior to the regeneration of the particulate filter (16), a NOₓ regeneration of the NOₓ storage catalytic converter (8) is carried out by briefly switching to rich-burn mode.

10. Method according to Claim 9, **characterized in that** the NOₓ regeneration is carried out as a function of an NOₓ loading state of the NOₓ storage catalytic converter (18).
